Europäisches Patentamt

European Patent Office

Office européen des brevets

(19)

(11) EP 0 802 889 B1

## (12) FASCICULE DE BREVET EUROPEEN

(45) Date de publication et mention
de la délivrance du brevet:
**12.08.1998 Bulletin 1998/33**

(21) Numéro de dépôt: **96900208.8**

(22) Date de dépôt: **05.01.1996**

(51) Int Cl.⁶: **C03B 5/43**

(86) Numéro de dépôt international:
**PCT/BE96/00001**

(87) Numéro de publication internationale:
**WO 96/20895 (11.07.1996 Gazette 1996/31)**

(54) **PROCEDE DE FABRICATION DE VERRE, SOLE ET FOUR POUR LA MISE EN OEUVRE DE CE PROCEDE**

VERFAHREN ZUR HERSTELLUNG VON GLAS, BODEN UND OFEN UND DESSEN ANWENDUNG

METHOD FOR MAKING GLASS, FLOOR AND FURNACE THEREFOR

(84) Etats contractants désignés:
**BE DE FR GB IT NL**

(30) Priorité: **06.01.1995 BE 9500010**

(43) Date de publication de la demande:
**29.10.1997 Bulletin 1997/44**

(73) Titulaire: **Robyn, Pierre**
**1400 Nivelles (BE)**

(72) Inventeur: **Robyn, Pierre**
**1400 Nivelles (BE)**

(74) Mandataire: **van Wijk, Alexander Pieter et al**
**Burmah Castrol Trading Limited,**
**Group Patents Department,**
**Burmah Castrol House,**
**Pipers Way**
**Swindon, Wiltshire SN3 1RE (GB)**

(56) Documents cités:
**EP-A- 0 094 441          FR-A- 2 503 133**
**US-A- 1 989 103          US-A- 2 174 458**
**US-A- 3 294 517**

## Description

L'invention concerne un procédé de fabrication de verre .

Les besoins de production du verre font que, pour tous les types de fabrication (verre plat ,verre creux , verres spéciaux dont les borosilicates ,les verres opales ,les verres potassiques,les verres céramiques , les verres pour fibres...), l'on regrette régulièrement de ne pouvoir exercer un contrôle souple de la très importante température de l'interface verre- réfractaire à l'une ou plusieures des soles composant le four .A titre d'exemple nous signalons le cas aux feeders ,à la zone de conditionnement ou au bassin de travail ,au siphon ou au spout , au rétrécissement ,à l'affinage,à la zone de fusion ,à l'enfournement ,etc ...

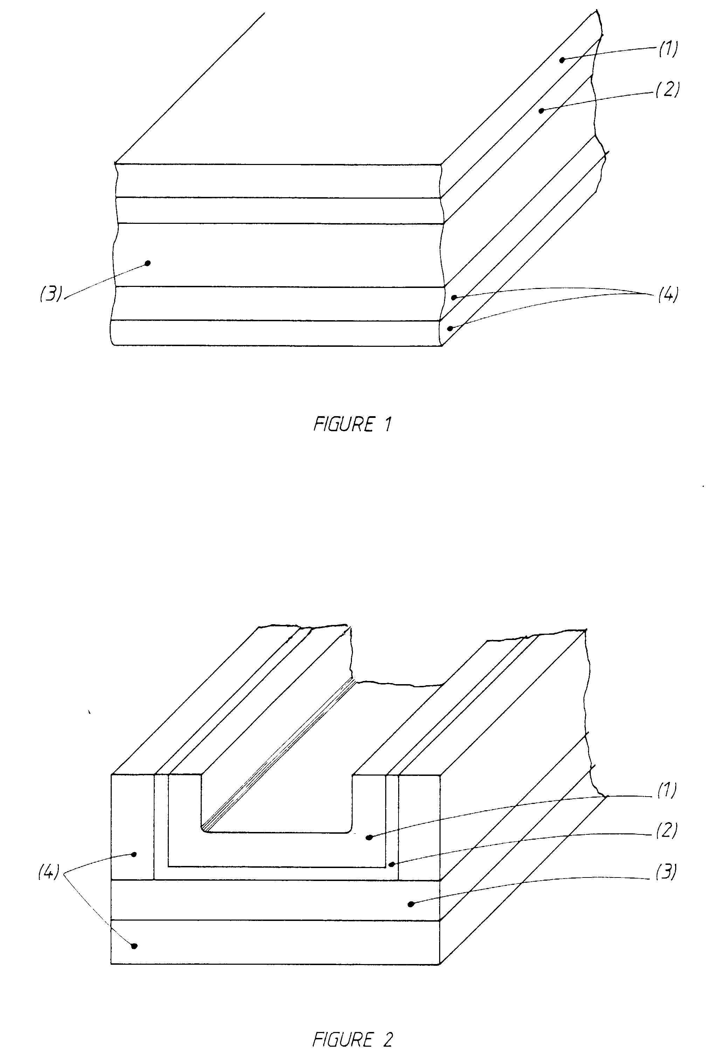

Dans les fours utilisés en industrie les blocs réfractaires de soles sont constitués de parallélipipèdes pleins . Les soles de tels fours comprennent une superposition de couches de ces blocs .La couche supérieure ,donc celle qui est en contact avec le verre, est composée de dalles en électrofondus ( 1 ) En dessous de la couche supérieure sont déposés des produits non-façonnés ( 2 ) dont la fonction principale est d'empêcher la pénétration du verre dans les couches sousjacentes qui péjorent sérieusement la qualité du verre . La partie intermédiaire des soles ( 3 ) est réalisée en blocs silico-alumineux ou en blocs à base de méta-silicates d'alumine ou de mullite.Pour terminer , la partie inférieure se compose de blocs isolants du type silico-alumineux ( 4 ). La figure 1 montre en perspective une coupe d'une telle sole .La figure 2 illustre une coupe analogue d'un feeder pour le verre creux .Dans ce cas , la dalle de la couche supérieure (1) est remplacée par une brique de forme souvent en électrofondu .

Dans les fours connus , le contrôle de la température d'interface verre-réfractaire s'est avéré un problème difficile à résoudre . En effet, l'action d'un soufflage d'air en dessous de la sole est limitée et très lente vu l'épaisseur de la sole et le pouvoir isolant des couches inférieures .Autre part la méthode qui consiste à modifier la répartition des feux aux différents brûleurs pour influencer les températures d'interface verre-sole à travers le verre ,présente le risque important de déstabiliser le four et d'augmenter le nombre de défauts dans le verre.Enfin un soufflage important d'air à l'intérieur du four peut provoquer des défauts de pierres venant de la superstructure , et dans le cas de production de verre de couleur des hétérogénéités de teinte.On se sert de dispositifs ,bien localisés, permettant de rendre amovible , en cours de campagne , la couche isolante de la sole pour modifier les déperditions calorifiques . Ces dispositifs ,peu commodes , ne permettent pas un contrôle précis de la température d'interface verre-réfractaire . Dans les feeders des fours à verre creux, le problème ne trouve pas de solution satisfaisante pour des verres colorés .

On connait par le document US-A -3.294.517 une sole de feeder comprenant des blocs munis d'une résistance électrique pour réduire le gradient vertical dans le verre . Par le document FR-A-2.503.133 on connait une lèvre de coulée comportant un bloc de réfractaire en contact avec le verre fondu présentant un canal de refroidissement perpendiculairement à l'écoulement du verre pour homogénéiser le profil de corrosion. Enfin , par le document US-A-2.174.458 , on connait des blocs réfractaires en contact avec le verre fondu comportant des circuits de refroidissement le long des joints des blocs pour établir une protection contre la corrosion et l'infiltration du verre et des circuits de compensation , chauffant directement en dessous de l'interface verre - réfractaire .

La présente invention a pour but de remédier aux inconvénients mentionnés çi-avant ,inconvénients essentiellement dus au fait qu'un contrôle précis et rapide de la température d'interface verre-réfractaire est manquant et que ces températures sont plutôt subies que dominées .

Ce but est atteint par le procédé selon la revendication 1.

Selon l'invention le procédé de fabrication comporte le perfectionnement, consistant à pouvoir contrôler et réguler la température de l'interface verre-réfractaire, afin d'optimaliser le fonctionnement d'un ou plusieurs secteurs du four et d'améliorer la production et la qualité du verre.

L'opération de contrôler et de réguler sélectivement la température de l'interface verre-réfractaire se fait à l'aide d'un ou plusieurs circuits de fluide , permettant de chauffer ou de refroidir l'interface verre-réfractaire , qui est (sont) situé(s) dans la zone intermédiaire de l'épaisseur de la sole ,ladite zone intermédiaire se situant en dessous des couches réfractaires supérieures, qui doivent résister à la corrosion et à l'infiltration par le verre et au dessus de(s) la couche(s) isolante(s) inférieure (s ). Le ou les fluide(s) sont régulés en temperature et en débit .

Par exemple l'opération de contrôler et de réguler la température d'interface verre-réfractaire se fait à l'aide de circuits de fluide , dirigés parallèlement à la direction principale de l'écoulement du verre au voisinage de la sole .

Selon une forme de réalisation on injecte le ou les fluide(s) dans les circuits de fluide , avantageusement sous la forme d'injections complémentaires successives d'un flux calorifique ou frigorifique par $m^2$ de surface exposée au verre dont la valeur totale ne dépasse pas 50%,de préférence moins de 20%, du flux par $m^2$ qui traversait la sole avant la correction ,l'injection complémentaire suivante se faisant après stabilisation de la température près de l'interface verre-réfractaire et /ou celle de la couche intermédiaire de la sole suite à l'action de l'injection précédente .

Selon une forme de réalisation particulière on mesure la température du réfractaire au voisinage de l'interface verre-réfractaire , on mesure la température d'une couche intermédiaire située entre;d'une part en dessous des couches réfractaires supérieures , qui doivent résister à la corrosion et à l'infiltration par le verre et d'autre part au dessus de(s) la couche(s) isolante(s) inférieure(s ),et on controle la température et le flux calorifique / frigorifique du fluide introduit dans le circuit en fonction desdites températures dans les réfractaires pour éviter de produire un choc thermique .

Avantageusement selon le procédé de l'invention on règle la température du fluide en fonction de la température de la couche intermédiaire et de la différence entre d'une part la température près de l'interface verre-réfractaire et d'autre part sa température de consigne et /ou on règle le débit calorifique du fluide introduit dans le circuit de fluide en rapport à la différence entre la température du réfractaire près de l'interface verre-réfractaire et sa température de consigne et en fonction de la déperdition calorifique de la sole avant le réglage .

En particulier on règle la température du fluide et le débit calorifique du fluide respectivement en fonction de:

a) la température de la couche intermédiaire et de la différence entre d'une part la température près de l'interface verre-réfractaire et d'autre part sa température de consigne , et
b )la différence entre la température du réfractaire près de l'interface verre-réfractaire et sa température de consigne et en fonction de la déperdition calorifique de la sole avant le réglage .

Selon des exemples de réalisations avantageux on règle le débit calorifique de fluide entre une valeur minimale non nulle et une valeur maximale , la valeur minimale correspondant à une injection complémentaire de débit calorifique n'influençant pas calorifique de fluide entre une valeur minimale non nulle et une valeur maximale , la valeur minimale correspondant à une injection du débit calorifique complémentaire influençant la température du réfractaire près de l'interface d'au maximum 1 à 2 °C , ou on règle le débit calorifique de fluide entre une valeur minimale non nulle et une valeur maximale , la valeur maximale correspondant au double de la différence en flux calorifique entre les déperditions calorifiques de la sole aux températures respectives de celle de la consigne et celle de la température de l'interface verre-réfractaire avant la première injection .

En ce qui concerne la température du fluide on la règle avantageusement de la façon suivante :

*    soit on règle la température du fluide par rapport à la température de la couche intermédiaire de manière à ce que la différence de température entre le fluide et la couche intermédiaire diminue lorsque la température de l'interface se rapproche de la température de consigne .

*    soit on règle la température du fluide entre une valeur minimale et une valeur maximale qui correspond à la température de la couche intermédiaire diminué / ajouté du double de la différence entre la température de consigne et la température près de l'interface verre-réfractaire avant le réglage .

Conformément à une forme de réalisation du procédé selon l'invention on mesure les températures du réfractaire près de l'interface verre-réfractaire dans des zônes différentes de la sole ou parties de sole d'une zone munies chacune d'un circuit indépendant et l'on règle de façon indépendante l'un de l'autre la température et le flux calorifique /frigorifique de fluide introduit dans chacun desdits circuits , pour imposer un gradient thermique entre lesdites zônes ou pour réduire le gradient thermique entre les parties d'une zône .

L'invention a également comme objet un ensemble ,comportant une sole ou partie de sole pour four de verrerie pour la mise en oeuvre d'un procédé suivant l'invention , cette sole ou partie de sole étant constituée de plusieurs couches de matériaux réfractaires dont les couches supérieures sont choisies pour résister à la corrosion et à l'infiltration par le verre fondu et la couche inférieure au moins est choisie pour isoler thermiquement la sole, caractérisée en ce que la sole ou partie de sole comporte en outre au moins une couche intermédiaire située entre les couches susdites et contenant un ou plusieurs circuits de fluide permettant d'agir sur la température d'interface verre-réfractaire. L'ensemble comporte en outre un moyen agissant sur la température et le débit du ou des fluide(s) de manière à contrôler et réguler la température de l'interface verre - réfractaire .

Avantageusement les circuits sont adaptés pour présenter une surface d'échange fluide- réfractaire au moins égal à 15% de la surface de la couche supérieure exposée au verre .

En particulier les circuits sont adaptés pour présenter une surface d'échange fluide-réfractaire comprise entre 25 et 100% de la surface de la couche supérieure exposée au verre .

Selon une forme de réalisation particulière , la sole ou partie de sole est équipée d'au moins deux thermocouples , dont l'un installé dans le réfractaire électrofondu ,en contact avec le verre , servant à mesurer la température le plus près de l'interface verre-réfractaire,( appelé thermocouple 1 ), et l'autre, (appelé thermocouple 2 ) servant à mesurer la température du réfractaire de la couche intermédiaire,lesdits thermocouples étant destinés à être connectés à un dispositif de commande d'un ventilateur-brûleur qui délivre un flux calorifique de fluide , en rapport à l'écart entre la température de l'interface verre-réfractaire , mesurée par le thermocouple 1, et sa consigne,ledit fluide ayant une température évitant ou limitant tout choc thermique au réfractaire qui contient le circuit .

La sole selon l'invention peut être constitué de blocs comportant un ou plusieurs conduit(s)formant le ou les circuit(s)susdit(s) ,dont un au moins un des blocs contient le thermocouple 2 ,et /ou est constituée de blocs comportant un ou plusieurs conduit(s) coopérant avec les conduits d'autres blocs pour former le ou les circuits susdit(s) ,dont un au moins un des blocs contient le thermocouple 2 .

De tels blocs ont avantageusement les faces latérales imbriquant les unes dans les autres .

Des plaques compressibles en fibres réfractaires sont avantageusement situées entre les blocs pour reprendre les efforts de dilatation et étanchifier les circuits .Ces plaques présentent avantageusement des trous disposés en regard des conduits .

Le conduit et /ou le cicuit peut être muni localement ou non de moyens pour augmenter la surface d'échange fluide-réfractaire .

Il va de soi que la couche intermédiaire , au lieu d'être formée de blocs est une couche de réfractaires non-façonnés ,mis en place par (vibro)coulage ou damage .

Enfin la présente invention a également comme objet : un four de verrerie, muni d'un ensemble selon l'invention , cet ensemble comportant en outre un ventilateur-brûleur commandé par un dispositif de commande recevant des signaux de moyens mesurant la température du réfractaire près de l'interface verre-réfractaire et la température de la couche intermédiaire ,ledit dispositif de commande délivrant un fluide dont la température et le débit calorifique sont réglés pour la mise en oeuvre du procédé .

Des détails et caracteristiques de l'invention ressortiront de la description détaillée suivante d'exemples de réalisation . Dans ces descriptions on fait référence aux dessins ci-annexés .

Dans ces dessins

la figure 1 est une vue partielle en coupe d'une sole conventionnelle .

la figure 2 est une vue partielle en perspective d'un feeder ou d'un bassin de travail d'un four à verre creux .

la figure 3 est une vue partielle de la sole représentée à la figure 1 mais munie de circuits selon l'invention .

la figure 4 est une vue partielle du feeder représenté à la figure 2 , mais muni de circuits selon l'invention .

les figures 5A , 5B et 5C montrent respectivement des blocs pour réaliser un circuit, une vue en coupe horizontale à mi-épaisseur du bloc et une vue en coupe verticale en long dans le plan de symétrie du bloc .

la figure 6 montre un autre bloc pour réaliser un circuit .

la figure 7 montre schématiquement un four à verre creux comprenant plusieurs feeders et un bassin de travail , et

la figure 8 montre schématiquement un four float .

Différentes formes de l'invention vont être décrites par référence aux figures ci-jointes .Par référence aux figures 1 à 6 on représente respectivement par :

(1)la couche des dalles ou blocs de forme réfractaires , à haute résistance à la corrosion par le verre fondu (électrofondu e.a.).

(2)la couche des réfractaires non-façonnés empêchant l'infiltration par le verre dans les couches sousjacentes . C'est cette infiltration qui provoque toujours des défauts dans le verre p.ex. sous la forme de bulles , grains , cordes , etc...

(3)la couche intermédiaire de la sole ,qui est composée en réfractaires silico-alumineux ,rarement en métasilicates d'alumine ou de mullite .C'est une couche de transition ,caracterisée par une résistance à la corrosion moyenne et un pouvoir isolant moyen .Elle doit protéger la couche isolante sousjacente ,peu résistante à la corrosion , contre une perforation accidentelle par le verre .

(4)la couche des réfractaires isolants qui doivent limiter la déperdition calorifique à travers la sole .

(5)circuits de passage de fluide chauffant ou refroidissant ,selon l'invention ,dans la couche intermédiaire d'une sole .

(6)blocs de sole,selon l'invention,nécessitant assemblage de leurs conduits pour former les circuits .

(7)conduits dans des blocs de sole selon l'invention.

(8)plaque en fibres réfractaires avec trou en regard des conduits .

(9)trou dans plaque en fibres réfractaires en regard des conduits .

(10)trou borgne pour thermocouple pour la mesure de la température de la couche intermédiaire.

(11)blocs de sole ,selon l'invention ,formant le circuit par son seul conduit avec trou borgne de thermocouple.

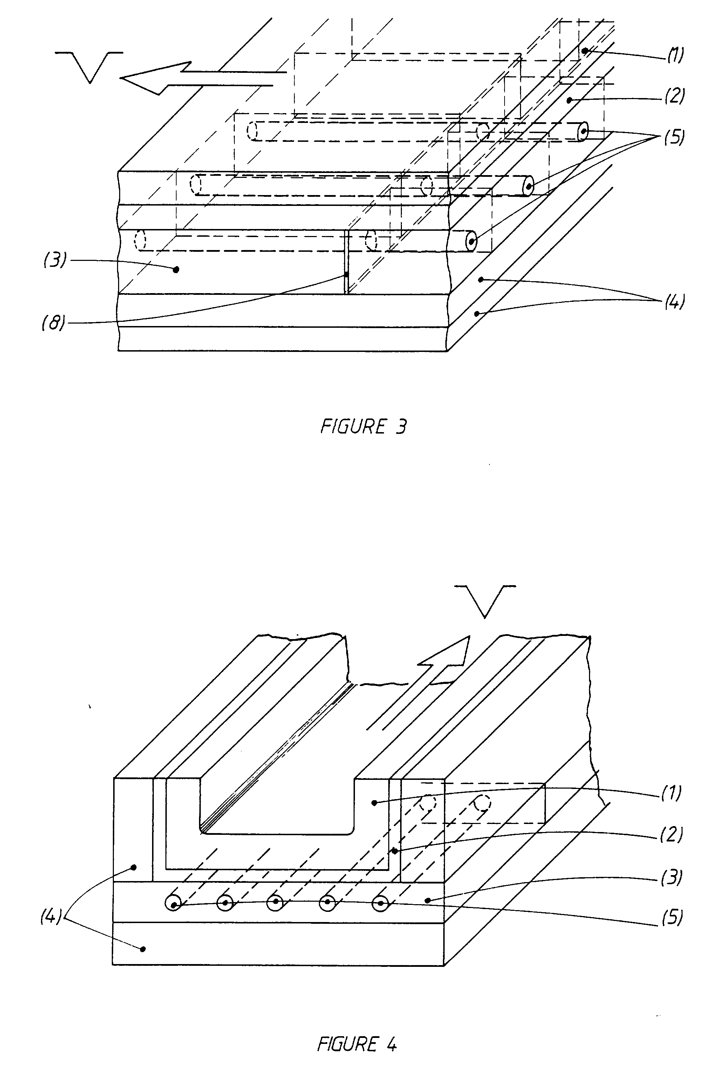

La figure 3 montre une coupe d'un exemple d'application de l'invention à une sole conventionnelle ,qui elle-même est illustrée dans la figure 1.Les circuits sont installés parallèlement à la direction de l'écoulement du verre , qui est indiqué par la flèche V . A titre d'exemple le diamètre des circuits est de 8 cm ,les circuits étant placés au milieu de l'épaisseur des blocs réfractaires , qui constituent la partie intermédiaire de la sole (couramment aux dimensions de ∼100 x 50 x 20cm) Au cas où les joints entre les blocs seraient croisés dans la sole , le conduit du bloc sera légèrement décalé du centre.

A raison de 1 conduit par bloc , parallel à la longueur des blocs , ceci représente une surface d'échange fluide-réfractaire par rapport à la surface supérieure du bloc de l'ordre de 50% si l'écartement latéral entre deux conduits est de 0.5m ou 25% pour un écartement de 1m .

La figure 4 montre une coupe d'un exemple d'application de l'invention à un feeder . Les circuits sont à nouveau parallèles à l'écoulement du verre (indiqué par la flèche V),à mi-épaisseur des blocs de la couche intermédiaire de la sole .A titre d'exemple leur diamètre est de 6 cm à raison de 3 circuits par mètre de largeur du feeder .Ce qui représente une surface d'échange fluide-réfractaire par rapport à la surface supérieure du bloc de l'ordre de 50%.

La figure 5A montre des exemples de blocs dont leur assemblage est nécessaire pour former les circuits susdits .Le bloc de droite assure uniquement le passage horizontal du fluide tandis que le bloc de gauche sert pour l'entrée ou la sortie de la couche intermédiaire de la sole .Il est évident que les entrées ou sorties de la couche intermédiaire de la sole nécessitent un passage à travers la couche des isolants .

Dans la même figure 5A on présente une plaque compressible en fibres réfractaires munie d'un trou (9) disposé en regard des conduits dont la fonction est double : d'une part il faut absorber les dilatations thermiques des blocs et d'autre part il faut rendre étanche le circuit .

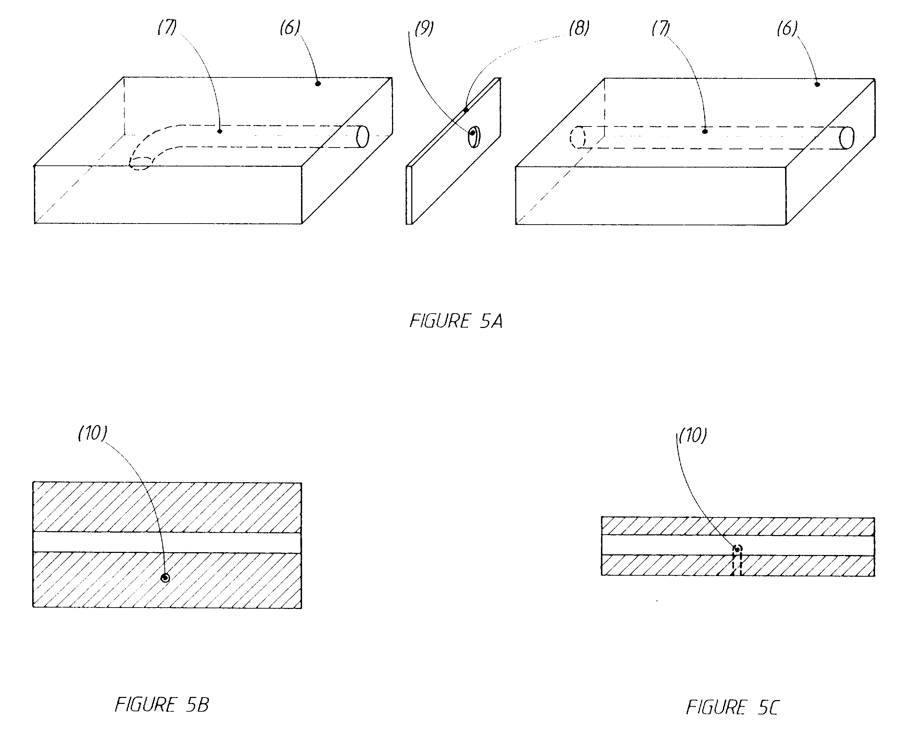

Le thermocouple pour mesurer la température de la couche intermédiaire est placé de préférence dans le trou borgne (10) ,à la même hauteur que le conduit, comme le montre la figure 5C La figure 5B montre l'écart latéral,vis à vis du conduit,qui se situe favorablement entre 3 et 10 cm .Ce même écartement latéral peut être repris pour le thermocouple mesurant la température de l'interface verre-réfractaire .

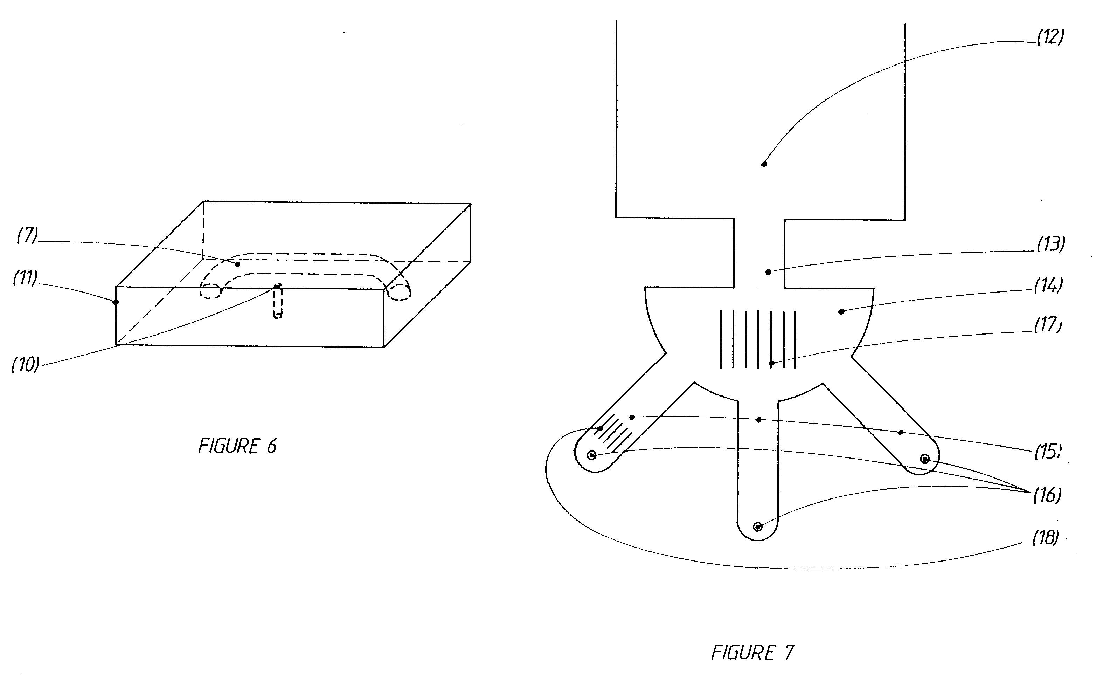

A titre de réalisation particulière on se servira de blocs tels que décrits dans la figure 6 , présentant des blocs individuels dont le conduit dans le bloc s'identifie au circuit (parceque le bloc contient à la fois l'entrée et la sortie de la couche intermédiaire de la sole pour le fluide).Ces blocs sont surtout intéressant pour des circuits courts mais dont la répétition en longueur pourra aussi former des circuits plus longs .

Pour illustrer une installation avec soles ou partie de soles selon l'invention ,la figure 7 montre deux exemples d'application dans un four à verre creux .Dans la fabrication du verre creux ,le verre fondu arrive dans la zone d'affinage (12) passe après une traversée du spout (13) dans un bassin de travail (14) où il doit refroidir suffisamment avant d'être conduit dans les feeders (15), lesdits feeders se terminant par une cuvette avec assiette (trouée )(16)ou avec un plongeur on fait passer le gob ou la quantité unitaire pour fabriquer l'article .

Dans le domaine du verre creux p.ex. la tendance actuelle est de pousser la production des fours aux tirées de plus en plus fortes (de l'ordre de $4T/m^2$ de fusion ).Il en résulte que le verre arrive dans le bassin de travail trop chaud ,pour être délivré aux zônes de formage .A cause d'un refroidissement fait par un soufflage dans le bassin de travail sur le verre ,ou à l'aide d'une perte calorifique par rayonnement de la surface du verre via des ouvertures dans la superstructure,le verre du fond devient plus chaud que le verre en surface .Cette hétérogéneité thermique du verre est génante pour la production du verre creux .

Une sole ou partie de sole dans le bassin de travail selon l'invention augmente le potentiel de refroidissement à l'endroit où le verre est le plus chaud et l'on est en mesure de délivrer au feeder un verre plus froid et surtout plus isotherme .Dans la figure 7 on a schématisé dans le bassin de travail une partie de la sole munie de circuits selon l'invention ,représentée par (17).

Dans le cas p.ex. que nous voulons y abaisser de 50°C la température de l'interface verre-réfractaire ,nous le ferons par le méthode d'approches successives en injectant des flux frigorifiants , d'amplitude toujours de plus en plus petite .Avant la première injection nous mesurons les deux températures ,celle de la température d'interface verre-réfractaire ($T_{if}$) et celle du réfractaire de la couche intermédiaire ($T_{c.i}$) $T_{if}$ -50°C devient la température de consigne $T_{con}$ .

On suppose connu les flux calorifiques par $m^2$ ($Q_{Tif}$) et ($Q_{Tif-50°C}$) qui passent à travers la sole (sans aucune action de soufflage ) pour des températures d'interface verre-réfractaire ($T_{if}$) et ($T_{if}$ - 50°C).Ces flux calorifiques sont calculables à partir de la connaissance de la composition de la sole et de la température d'interface verre-réfractaire .

La première injection ,qui est la plus forte , par $m^2$ de la surface de la sole est définie ainsi :

$$T\,inj._1 = T_{ci} - n_1 \times \{T_{if} - T_{con}\} + (A)$$

$$\text{avec} \qquad n_1 < n_{max} = 2$$

$$Q\,inj._1 = n_1 \times \{Q\,T_{if} - Q\,T_{con}\} + (B)$$

Pour les premières injections on ne tiendra pas compte des termes A ou B .

Après cette première injection on attend la stabilisation de la nouvelle $T_{if\,2}$ et la nouvelle $T_{c.i2}$,et si p. ex. les résultats obtenus sont insuffisants on diminue la température de l'injection à $T_{inj.2}$.

$$T_{inj.2} = T_{c.i2} - n_2 \times \{Tif - T\,con\}$$

avec $n_2 > n_1$
et l'on augmente le flux frigorifique de $Q\,inj_2$

$$Q\,inj._2 = n_2 \times \{Q\,Tif - Q\,T\,con\}$$

et ainsi de suite avec de valeurs de $n_i$ décroissantes...

A cause de l'imprécision du modèle due à la configuration du four et de la sole , il peut être opportun pour les derniers ajustements d'introduire des constantes A et B ,qui doivent être déterminées empiriquement .Leur rôle commence seulement à jouer quand $T_{ifi}$ s'approche de la T con (par exemple différence entre $T_{ifi}$ et $T_{con}$ de moins de 10°C ).

Une deuxième application de l'invention dans le domaine du verre creux se situe dans les feeders .La gestion thermique des feeders est de la plus grande importance dans la fabrication des articles de verre creux. Surtout le verre dans la zône de conditionnement du feeder, juste en amont de la cuvette doit être très homogène . En particulier ce manque d'homogénéité est un vrai problème avec des verres colorés qui ont une faible transmission radiative .L'élimination de l'hétérogénéité thermique du verre près de la sole est le plus difficile à traiter avec les moyens actuels .

Une installation d'une sole selon l'invention p.ex. dans la dernière zône d'un feeder en amont de la zône de conditionnement, avec plusieurs circuits indépendants , parallèles à l'écoulement du verre , est en mesure d'éliminer les gradients verticaux et surtout les gradients transversaux tenant compte que le verre près des bords est en plus soumis aux pertes thermiques par les bords . L'injection de plusieurs flux calorifiques ou frigorifiques , réglables en fonction de leur écartement de l'axe du feeder ,dirigés parallèlement à l'écoulement du verre , assurent un maximum de possibilités pour combattre l'hétérogéneité thermique dans le flux vitreux .La figure 7 montre un schéma d'un tel montage dans un des feeders ,représenté par (18).

Pour régler l'isothermicité près de la sole on pourrait d'abord abaisser la température dans l'axe du feeder à l'aide du circuit central ,vérifier l'influence de cette action sur les températures latérales et ensuite imposer une température de consigne commune aussi bien pour le circuit central que pour les circuits latéraux .Selon l'importance du problème on pourrait se servir de trois ou de cinq circuits .

Les feeders bénéficiant des soles selon l'invention auront des facteurs K ,( exprimant leur aptitude à produire un verre thermiquement homogène ), plus élevés que les facteurs K des feeders actuels .

Dans la fabrication du verre plat qui actuellement se réalise dans des fours float , il y a plusieurs possibilités d'application de soles selon l'invention .

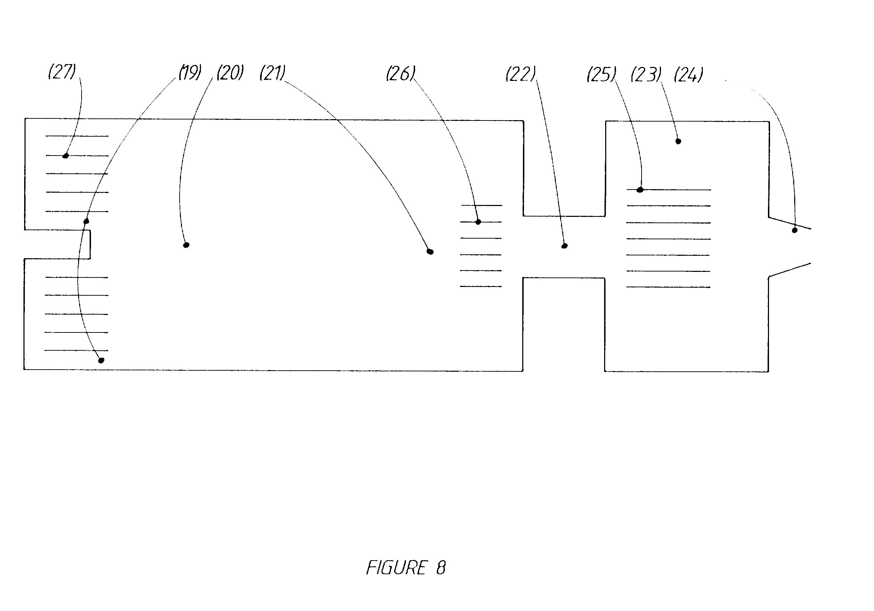

La fabrication peut être schématisé ainsi (voir figure 8) :L'enfournement des matières premières se fait par un ou plusieurs doghouses (19) .Le verre fondu dans la zône de fusion (20) arrive dans la zône d'affinage (21) et passe viâ un rétrécissement (22) pour aboutir dans la zone de conditionnement (23) ,ou il est amené à la lèvre de coulée (24) .

Dans le domaine du verre plat il y a tendance actuelle de changer,nettement plus que dans le passé ,de production et de couleur.Ce qui signifie e.a. que souvent le besoin existe de pouvoir faire des corrections à la température d'interface verre-réfractaire dans la zône de conditionnement .N'ayant qu'une sole à disposition, ( dont l'isolation est éventuellement amovible ),il est difficile de satisfaire les multiples besoins de la production .

Une sole selon notre invention dans la zône de conditionnement, représentée par le groupe de circuits (25) , permettra de s'adapter aux multiples conditions que la production amène .On peut introduire un refroidissement si le verre arrive trop chaud ,si l'on veut réduire le soufflage d'air dans la zône de conditionnement ...On peut introduire un chauffage si le courant de retour n'est pas suffisant , si la fabrication de verre coloré rend la sole trop froide ...

Dans le cas p.ex. que nous voulons augmenter de 50°C la température de l'interface verre-réfractaire ,nous le ferons par le méthode d'approches successives en injectant des flux calorifiques complémentaires , d'amplitude toujours de plus en plus petite . Avant la première injection nous mesurons les deux températures ,celle de la température d'interface verre-réfractaire ($T_{if}$) et celle du réfractaire de la couche intermédiaire ($T_{c.i}$). $T_{if}$ + 50°C devient la température de consigne $T_{con}$ .

On suppose connu les flux calorifiques par $m^2$ (Q $T_{if}$) et (Q $T_{if}$ +50°C)qui passent à travers la sole (sans aucune action de soufflage ) pour des températures d'interface verre-réfractaire ($T_{if}$) et ($T_{if}$ +50°C).Ces flux calorifiques sont calculables à partir de la connaissance de la composition de la sole et de la température d'interface verre-réfractaire .

La première injection ,qui est la plus forte , par $m^2$ de la surface de la sole est définie ainsi :

$$T_{inj.1} = T_{ci} + n_1 \times \{T_{con} - T_{if}\} + (A)$$

avec $n_1 < n_{max} = 2$

$$Q_{inj.1} = n_1 \times \{Q\, T_{con} - Q\, T_{if}\} + (B)$$

Pour les premières injections on ne tièndra pas compte des termes A ou B .

Après cette première injection on attend la stabilisation de la nouvelle $T_{if2}$ et la nouvelle $T_{c.i2}$,et si p. ex. les résultats obtenus sont insuffisants on augmente la température de l'injection à $T_{inj.2}$:

$$T_{inj.2} = T_{c.i2} + n_2 \times \{T_{con} - T_{if}\}$$

avec $n_2 < n_1$
et l'on augmente le flux calorifique de $Q_{inj2}$

$$Q_{inj.2} = n_2 \times \{Q\, T\, con - Q\, T\, if\}$$

et ainsi de suite ,avec des valeurs de $n_i$ décroissantes...

A cause d'une imprécision du modèle présenté ,il est avantageux lors des derniers ajustements d'introduire des constantes A et B empiriques .Leur rôle commence seulement à jouer quand $T_{if.i}$ s'approche de la $T_{con}$

p.ex .de moins de 10°C .

Un deuxième application de l'invention dans le four float ,représentée par le groupe de circuits (26), se situe à la sole de la zône fin d'affinage ou régulièrement le verre a tendance à être trop chaud et le verrier ayant peu de possibilités d'intervenir dans un four conventionnel .

Une troisième application de l'invention ,représentée par le groupe de circuits (27), se situe dans le ou les doghouse(s) dont il faut éviter qu'ils deviennent trop froids et freinent ,jusqu'à pouvoir bloquer ,la production du verre .

Dans la figure 8 sont indiqués schématiquement les soles avec les circuits aux trois endroits mentionnés çi-dessus .

Il est important de noter que tous ces flux à leur sortie de la couche intermédiaire de la sole peuvent être récupérés directement et serviront p.ex. pour préchauffer l'air pour la combustion des brûleurs du four .

La grande liberté dans la longueur, la forme et la position des circuits , dans la section et la position des conduits, permet une application adaptée aux soles ou parties de soles dans toutes les zônes du four .

La plupart des espèces de réfractaires et des modes de fabrication se prêtent à la réalisation des blocs munis de conduits .Parmi les espèces réfractaires nous signalons e.a.

1°les silico-argileux .
2°les produits à base de métasilicate d'aluminium.
3°les produits de mullite ,
4°les produits à haute teneur en alumine .
5°les zircons et les zircones.
6°les A.Z.S.frittés ( y compris avec ingrédients électrofondus ).
7°les produits à base de chrome .
8°les produits électrofondus (A.Z.S. ,Al2O3,ZrO2,à base de Cr2O3.).
9°l'oxyde d'étain .
10°la silice vitreuse .

Parmi les modes de fabrication nous mentionnons :

1°le pressage par presse industrielle où par damage de blocs à conduits prémoulés, suivi d'étuvage ou de cuisson.
2°le pressage et cuisson de blocs pleins et forage ultérieur des conduits.
3°la coulée en barbotine avec prémoulage suivi de cuisson.
4°la coulée ou vibro-coulée de low cement castables (L.C.C.)ou de ultra low cement castables (U.L.C.C.) avec prémoulage,suivi d'étuvage ou de cuisson.
5°la fabrication avec le liant silicate d'ethyl .
6°l'électrofusion avec ou sans prémoulage.
7°le pressage isostatique avec prémoulage et cuisson.

Les produits non-façonnés sont à base des mêmes éspèces réfractaires susmentionnés.

L'avantage de l'invention réside dans le fait que l'on garde intact le potentiel des soles conventionnelles c.à. d. la résistance à la corrosion et à l'infiltration par le verre des couches supérieures et le pouvoir isolant des couches inférieures mais que les couches intermédiaires des soles revendiquées exerceront en plus une fonction active dans la fabrication , celle de pouvoir contrôler et réguler la température verre-réfractaire ,contribuant ainsi à l'amélioration de la production du four et à la qualité du verre .

**Revendications**

1. Procédé de fabrication de verre,dans lequel un courant de verre dans un four de verrerie passe par dessus une sole ou une partie de sole, ladite sole ou partie de sole comportant une zône intermédiaire (3) se situant en dessous des couches réfractaires supérieures (1,2) qui doivent résister à la corrosion et à l'infiltration par le verre et se situant au dessus de(s) la couche(s) isolants inférieure(s) (4), par laquelle on contrôle et régule la température de l'interface verre-réfractaire grâce à un ou plusieurs circuits de fluide (5) situés dans la zône intermédiaire de la sole (3), le ou les fluide(s) du ou des circuits de fluide (5) étant régulés en température et en débit , permettant soit de chauffer, soit de refroidir ladite interface verre - réfractaire .

2. Procédé selon la revendication 1 ,caracterisé en ce que l'opération de contrôler et de réguler la température d'interface verre-réfractaire se fait à l'aide de circuits de fluide(5), dirigés parallèlement à la direction principale de l'écoulement du verre (V) au voisinage de la sole .

3. Procédé selon la revendication 1 , caracterisé en ce que l'on injecte dans les circuits de fluide(5), avantageusement sous forme d'injections complémentaires successives d'amplitude décroissante , un flux calorifique ou frigorifique par m$^2$ de surface exposée au verre dont la valeur totale ne dépasse pas 50%, de préférence moins de 20% ,du flux par m$^2$ qui traversait la sole avant la correction , l'injection complémentaire suivante se faisant avantageusement après stabilisation de la température près de l'interface verre-réfractaire et / ou celle de la couche intermédiaire (3) de la sole suite à l'action de l'injection précédente .

4. Procédé selon la revendication 1 ,caracterisé en ce que l'on mesure la température du réfractaire au voisinage de l'interface verre-réfractaire , on mesure la température d'une couche réfractaire intermédiaire(3) située entre d'une part en dessous des couches réfractaires supérieures (1,2) , qui doivent résister à la corrosion et à l'infiltration par le verre et d'autre part au dessus de(s) la couche(s) isolante (s) inférieure(s )(4),et on contrôle la température et le débit calorifique du fluide introduit dans le circuit de fluide(5)en fonction desdites températures dans les réfractaires pour éviter de produire un choc thermique .

5.     Procédé selon la revendication 1 ,caracterisé en ce que l'on règle la température du fluide en fonction de la température de la couche intermédiaire(3) et de la différence entre d'une part la température près de l'interface verre-réfractaire et d'autre part sa température de consigne .

6.     Procédé selon la revendication 1 ,caracterisé en ce que l'on règle le débit calorifique du fluide introduit dans le circuit(5) en rapport à la différence entre la température du réfractaire près de l'interface verre-réfractaire et sa température de consigne et en fonction de la déperdition calorifique de la sole avant le réglage .

7.     Procédé selon la revendication 1 ,caracterisé en ce que l'on règle la température du fluide et le débit calorifique du fluide respectivement en fonction de:

    a ) la température de la couche intermédiaire (3) et de la différence entre d'une part la température près de l'interface verre-réfractaire et d'autre part sa température de consigne , et
    b )la différence entre une température du réfractaire près de l'interface verre-réfractaire et sa température de consigne et en fonction de la déperdition calorifique de la sole avant le réglage .

8.     Procédé selon la revendication 1 ,caracterisé en ce que l'on règle le débit calorifique de fluide entre une valeur minimale non nulle et une valeur maximale , la valeur minimale correspondant à une injection complémentaire de débit calorifique du fluide n'influençant pas ou peu la température du réfractaire près de l'interface .

9.     Procédé selon la revendication 1 ,caracterisé en ce que l'on règle le débit calorifique de fluide entre une valeur minimale non nulle et une valeur maximale , la valeur minimale correspondant à une injection complémentaire de débit calorifique du fluide influençant la température du réfractaire près de l'interface d'au maximum 1 à 2°C.

10.     Procédé selon la revendication 1 ,caracterisé en ce que l'on règle le débit calorifique de fluide entre une valeur minimale non nulle et une valeur maximale , la valeur maximale correspondant à une injection complémentaire de débit calorifique du fluide correspondant au double de la différence en flux calorifique entre les déperditions calorifiques de la sole aux températures respectives de celle de la consigne et celle de la températ

ure de l'interface vere-réfractaire avant la première injection .

11.     Procédé selon la revendication 1 ,caracterisé en ce que l'on règle la température du fluide par rapport à la température de la couche intermédiaire(3) de manière à ce que la différence de température entre le fluide et la couche intermédiaire(3) diminue lorsque la température de l'interface se rapproche de la température de consigne .

12.     Procédé selon la revendication 1 ,caracterisé en ce que l'on injecte dans le circuit le fluide à une température entre une valeur minimale et une valeur maximale qui correspond à la température de la couche intermédiaire(3) diminuée ou augmentée du double de la différence entre la température de consigne et la température près de l'interface verre-réfractaire avant la première l'injection .

13.     Procédé selon la revendication 1 ,caracterisé en ce que l'on mesure les températures du réfractaire près de l'interface verre-réfractaire dans des zones différentes de la sole ou parties de sole d'une zone munies chacune d'un circuit de fluide indépendant (5) et l'on règle de façon indépendante l'un de l'autre la température et le débit de fluide introduit dans chacun desdits circuits , pour imposer un gradient thermique entre lesdites zônes ou pour réduire le gradient thermique entre les parties d'une zône .

14.     Ensemble (17,18,25,26,27) pour four de verrerie pour la mise en oeuvre d'un procédé suivant l'une des revendications 1 à 13 , cet ensemble comportant une sole ou partie de sole étant constituée de plusieurs couches de matériaux réfractaires , dont les couches supérieures (1,2) sont choisies pour résister à la corrosion et à l'infiltration par le verre fondu et la couche inférieure(4) au moins est choisie pour isoler thermiquement la sole ,caracterisée en ce que la sole ou partie de sole comporte en outre au moins une couche intermédiaire(3) située entre la couche inférieure(4) et les couches supérieures (1,2), cette couche intermédiaire(3) contenant un ou plusieurs circuits de fluide (5)permettant ,soit de chauffer , soit de refroidir l'interface verre-réfractaire , et en ce que l'ensemble comporte un moyen agissant sur la température et le débit du ou des fluides de manière à contrôler et réguler la température de l'interface verre - réfractaire ..

15.     Ensemble selon la revendication 14 ,caracterisé en ce que les circuits de fluide (5) sont adaptés pour présenter une surface d'échange fluide- réfractaire au moins égal à 15% de la surface de la couche supérieure(1) exposée au verre .

16. Ensemble selon la revendication 14 ,caracterisé en ce que les circuits de fluide(5) sont adaptés pour présenter une surface d'échange fluide- réfractaire comprise entre 25 et 100% de la surface de la couche supérieure (1)exposée au verre .

17. Ensemble selon la revendication 14 ,caracterisé en ce que la sole est équipée d'au moins deux thermocouples , dont l'un installé dans le réfractaire électrofondu en contact avec le verre et servant à mesurer la température prés de l'interface verre-réfractaire ,( appelé thermocouple 1 ), et l'autre , (appelé thermocouple 2 ) servant à mesurer la température du réfractaire de la couche intermédiaire (3) , lesdits thermocouples étant destinés à être connectés à un dispositif de commande d'un ventilateur-brûleur qui délivre un débit de fluide , en rapport à l'écart entre la température de l'interface verre-réfractaire , mesurée par le thermocouple 1, et sa consigne,ledit fluide ayant une température évitant ou limitant tout choc thermique au réfractaire qui contient le circuit de fluide(5).

18. Ensemble suivant la revendication 14 ,caracterisé en ce que la sole est constituée de blocs (11)comportant un ou plusieurs conduit(s)(7)formant le ou les circuit(s) de fluides(5) susdit(s) ,dont au moins un des blocs contient le thermocouple 2 .

19. Ensemble suivant la revendication 14 ,caracterisé en ce que la sole est constituée de blocs(6) comportant un ou plusieurs conduit(s)(7) coöpérant avec les conduits(7) d'autres blocs pour former le ou les circuits de fluides(5)susdit(s) ,dont au moins un des blocs(6) contient le thermocouple 2 .

20. Ensemble suivant la revendication 18 ou 19 ,caracterisé en ce que la sole est constituée de blocs(6, 11) dont des faces latérales s'imbriquent .

21. Ensemble suivant la revendication 19 ou 20 caracterisé en ce que la sole comporte des plaques compressibles(8) de fibres réfractaires situées entre les blocs(6) et munies de trous adéquats(9) disposés en regard des conduits(7) .

22. Ensemble suivant la revendication 18 ou 19 caracterisé en ce que le conduit(7) est muni de moyens pour augmenter la surface d'échange fluide-réfractaire .

23. Ensemble selon la revendication 14 , caracterisé en ce que la couche intermédiaire(3) est formée par des produits réfractaires non-façonnées ,mis en place par (vibro)coulage ou damage .

24. Four de verrerie muni d'un ensemble suivant quelconque des revendications 14 à 23 , ledit ensemble comprenant un ventilateur - brûleur, commandé par un dispositif de commande recevant des signaux de moyens mesurant la température du réfractaire près de l'interface verre-réfractaire et la température de la couche intermédiaire(3) , ledit dispositif de commande délivrant un fluide dont la température et le débit calorifique sont réglés pour la mise en oeuvre du procédé selon l'une quelconque des revendications 1 à 13 .

**Patentansprüche**

1. Verfahren zur Herstellung von Glas, bei dem in einem Schmelzofen ein Glasfluß über einen Boden oder einen Teil eines Bodens fließt, in dem unter der oberen, gegen Korrosion und Eindringen von Glas resistenten Feuerfest-Auskleidung (1, 2) und über einer oder mehreren Isolierschichten (4) eine der Überwachung und Regelung der Temperatur der Wärmeübergangsfläche zwischen Glasschmelze und Feuerfest-Auskleidung dienende Zwischenschicht (3) mit einem oder mehreren Fluid-Durchfluß-Kanälen (5) angeordnet ist, wobei Temperatur und Durchflußmenge des Fluids derart geregelt werden, daß sich die Wärmeübergangsfläche zwischen Glasschmelze und Feuerfest-Auskleidung erwärmt oder abkühlt.

2. Verfahren nach Anspruch 1, *dadurch gekennzeichnet, daß* die Überwachung und Regelung der Temperatur der Wärmeübergangsfläche zwischen Glasschmelze und Feuerfest-Auskleidung mit Hilfe von sich parallel zum Hauptstrom der Glasschmelze (V) in Nachbarschaft des Bodens erstrekkenden Fluid-Kanälen (5) erfolgt.

3. Verfahren nach Anspruch 1, *dadurch gekemzeichnet, daß* in die Fluid-Kanäle (5), vorzugsweise in Form einer Aufeinanderfolge von Injektionen mit abnehmender Wirkung, ein der Erwärmung bzw. Kühlung dienendes Fluid eingespeist wird in einer - bezogen auf die in Berührung mit Glas stehende Wärmeübergangs-Fläche - Menge von nicht über 50%, vorzugsweise weniger als 20%, der vor der Korrektur über der Wärmeübergangsfläche des Bodens befindlichen Glasmenge, wobei die jeweils nachfolgende Injektion vorteilhaft nach der Stabilisierung der Temperatur der Wärmeübergangs-Fläche Glas-Feuerfest und/oder der Temperatur in der Zwischenschicht (3) auf die Temperatur der jeweils vorangehende Injektion erfolgt.

4. Verfahren nach Anspruch 1, *dadurch gekennzeichnet, daß* zur Vermeidung eines Temperatur-Schocks die Temperaturen in der Feuerfest-Auskleidung in Nachbarschaft der Wärmeübergangsfläche Glas-Feuerfest, weiterhin in einer unterhalb der oberen Feuerfest-Auskleidungen (1, 2) gelegenen, gegen Korrosion und Eindringen von Glas resistenten Feuerfest-Zwischenschicht (3) sowie über der bzw. den unteren Isolierschicht(en) (4) gemessen und die thermische Leistung des in den Durchfluß-Kanal (5) eingespeisten Fluids in Abhängigkeit von der Temperatur der Feuerfest-Auskleidungen überwacht werden.

5. Verfahren nach Anspruch 1, *dadurch gekennzeichnet, daß* die Temperatur des Fluids in Abhängigkeit von der Temperatur der Zwischenschicht (3) und der Differenz der Temperaturen nahe der Wärmeübergangs-fläche Glas-Feuerfest und der Solltemperatur geregelt wird.

6. Verfahren nach Anspruch 1, *dadurch gekennzeichnet, daß* die thermische Leistung des in den Durchflußkanal eingespeisten Fluids in Abhängigkeit von der Differenz der Temperaturen nahe der Wärmeübergangsfläche Glas-Feuerfest und der Solltemperatur sowie der Wärmeabgabe des Bodens vor der Regelung.

7. Verfahren nach Anspruch 1, *dadurch gekennzeichnet, daß* die Temperatur des Fluids und die thermische Leistung des in den Fluidkanal eingespeisten Fluids geregelt werden in Abhängigkeit von

(a) der Temperatur der Zwischenschicht (3) und der Differenz der Temperaturen nahe der Wärmeübergangsfläche Glas-Feuerfest und der Solltemperatur, sowie
(b) der Differenz der Temperaturen nahe der Wärmeübergangsfläche Glas-Feuerfest und der Solltemperatur sowie des Wäremverlustes des Bodens vor der Regelung.

8. Verfahren nach Anspruch 1, *dadurch gekennzeichnet, daß* die thermische Leistung des Fluids zwischen einem von Null abweichenden Minimalwert und einem Maximalwert geregelt wird, wobei der Minimalwert der Einspeisung einer die Temperatur der Feuerfest-Auskleidung nahe der Wärmeübergangsfläche nicht oder nur unbeachtlich beeinflussenden thermischen Leistung entspricht.

9. Verfahren nach Anspruch 1, *dadurch gekennzeichnet, daß* die thermische Leistung des Fluids zwischen einem von Null abweichenden Minimalwert und einem Maximalwert geregelt wird, wobei der Minimalwert der Einspeisung einer thermischen Leistung entspricht, die eine Veränderung der Temperatur nahe der Wärmeübergangsfläche bis maximal zwischen 1° und 2° C bewirkt.

10. Verfahren nach Anspruch 1, *dadurch gekennzeichnet, daß* die thermische Leistung des Fluids zwischen einem von Null abweichenden Minimalwert und einem Maximalwert geregelt wird, wobei der Minimalwert dem Doppelten der Differenz der thermischen Leistungen an der Wärmeübergangsfläche Glas-Feuerfest bei Soll-Temperatur einerseits und Ist-Temperatur vor der ersten Einspeisung andererseits entspricht.

11. Verfahren nach Anspruch 1, *dadurch gekennzeichnet, daß* die Temperatur des Fluids in Abhängigkeit von der Temperatur der Zwischenschicht (3) derart geregelt wird, daß sich die Temperaturdifferenz zwischen dem Fluid und der Zwischenschicht bei Annäherung der Temperatur der Wärmeübergangsfläche an ihren Sollwert verringert.

12. Verfahren nach Anspruch 1, *dadurch gekennzeichnet, daß* das Fluid in den Fluid-Kanal mit einer Temperatur zwischen einem Minimalwert und einem Maximalwert eingespeist wird, der der Temperatur der Zwischenschenschicht (3), vermindert bzw. erhöht um das Doppelte des Differenz zwischen der Solltemperatur und der Temperatur der Wärmeübergangsfläche Glas-Feuerfest vor der ersten Einspeisung, entspricht.

13. Verfahren nach Anspruch 1, *dadurch gekennzeichnet, daß* die Temperaturen der Feuerfest-Schicht nahe der Wärmeübergangsfläche des Bodens in verschiedenen Bereichen bzw. Zonen gemessen werden, die jede einen unabhängigen Fluid-Kanal (5) aufweist und die Regelung der Temperatur und der thermischen Leistung des in die Kanäle eingespeisten Fluids unabhängig voneinander erfolgt zur Verhinderung eines Temperaturgefälles zwischen den Zonen und Verringerung des Temperaturgefälles zwischen den Teilen einer Zone.

14. Anordnung (17, 18, 25, 26, 27) für einen Glas-Schmelzofen zur Durchführung des Verfahrens nach einem der Ansprüche 1 - 13 mit einem aus mehreren Schichten eines feuerfesten Materials bestehenden Boden, von denen die oberen Schichten (1, 2) gegen Korrosion und Eindringen von geschmolzenem Glas resistent sind, sowie mindestens einer unteren thermisch isolierenden Schicht, *dadurch gekennzeichnet, daß* der Boden zwischen der unteren Schicht (4) und den oberen Schichten (1, 2) mindestens eine Zwischenschicht (3) mit einem oder mehreren die Erwärmung oder Kühlung der Wärmeübergangsfläche Glas-Feuerfest ermöglichenden Fluid-Kanälen (5) aufweist, wobei die Temperatur und die thermische Leistung des Fluids beeinflussende Mittel vorgesehen sind, derart, daß die Temperatur der Wärmeübergangsfläche Glas-Feuerfest überwacht und geregelt wird.

15. Anordnung nach Anspruch 14, *dadurch gekennzeichnet, daß* die Fluid-Kanäle (5) eine Wärmetauscher-Fläche Fluid-Feuerfest von mindestens 15% der oberen, mit der Glasschmelze in Berührung stehenden Schicht (1) aufweisen.

16. Anordnung nach Anspruch 14, *dadurch gekennzeichnet, daß* die Fluid-Kanäle (5) eine Wärmetauscher-Fläche Fluid-Feuerfest zwischen 25 und 100% der oberen, mit der Glasschmelze in Berührung stehenden Schicht (1) aufweisen.

17. Anordnung nach Anspruch 14, *dadurch gekennzeichnet, daß* in dem Boden mit mindestens zwei Thermoelemente angeordnet sind, von denen das eine (bezeichnet: Thermoelement 1) in der in Kontakt mit dem Glas stehenden Feuerfest-Schicht liegt und der Messung der Temperatur in Bereich der Wärmetauscher-Fläche dient, während das andere (bezeichnet: Thermoelement 2) der Messung der Temperatur der feuerfesten Zwischenschicht (3) dient, wobei die Thermoelemente bestimmt sind zur Herstellung einer Verbindung mit der Steuerung eines ein Fluid abgebenden Heiz-Gebläses in Abhängigkeit von der vom Thermoelement 1 gemessenen Soll-Wert-Abweichung der Wärmeübergangsfläche Glas-Feuerfest unter Vermeidung eines Temperatur-Schocks in der den Fluid-Kanal (5) enthaltenden Feuerfest-Schicht.

18. Anordnung nach Anspruch 14, *dadurch gekennzeichnet, daß* der Boden von Blocks (6) gebildet ist, die einen oder mehrere, die Fluid-Kanäle (5) bildenden Kanäle (7) aufweisen, von denen mindestens einer ein Thermoelement 2 enthält.

19. Anordnung nach Anspruch 14, *dadurch gekennzeichnet, daß* der Boden von Blocks (6) mit Kanälen (7) gebildet ist, die gemeinsam mit mit den Kanälen (7) anderer Blocks den Fluid-Kanal bzw. die Fluid-Kanäle (5) bilden, von denen mindestens einer ein Thermoelement 2 enthält.

20. Anordnung nach Anspruch 18 oder 19, *dadurch gekennzeichnet, daß* der Boden von Blocks (6, 11) gebildet ist, dessen Seitenflächen überlappend ineinandergreifen.

21. Anordnung nach Anspruch 19 oder 20, *dadurch gekennzeichnet, daß* der Boden zwischen den Blocks kompressible Platten (8) aus feuerfestem Fibermaterial enthält, die in Flucht mit den Kanälen (7) mit Durchlaßöffnungen (9) versehen sind.

22. Anordnung nach Anspruch 18 oder 19, *dadurch gekennzeichnet, daß* der Kanal (7) der Vergrößerung der Wäremaustauscher-Fläche Fluid-Feuerfest dienende Mittel aufweist.

23. Anordnung nach Anspruch 14, *dadurch gekennzeichnet, daß* die Zwischenschicht (3) durch direktes Einrütteln oder Stampfen von rohem Feuerfestmaterial in den Ofen eingebracht ist.

24. Glasschmelzofen mit einer Anordnung nach einem der Ansprüche 14 bis 23, enthaltend einen Heißluft-Ventilator, der von einer Regeleinrichtung gesteuert wird, die ihre Steuer-Signale von Mitteln erhält, die der Messung der Temperaturen der Feuerfest-Schicht in der Nähe der Wärmetauscher-Fläche Glas-Feuerfest und in der Zwischenschicht dienen, wobei die Regeleinrichtung ein Fluid abgibt, dessen Temperatur und thermische Leistung geregelt werden zur Durchführung des Verfahrens nach einem der Ansprüche 1 bis 13.

**Claims**

1. Method of making glass, in which a flow of glass passes over a floor or floor part in a furnace, said floor or floor part comprising an intermediate area (3) situated below upper refractory layers (1,2), which must resist corrosion and glass infiltration, and above lower insulating layer(s) (4), whereby the glass-refractory interface temperature is controlled and regulated by means of one or more fluid circuits (5), situated in the intermediate area of the floor (3), the fluid(s) of the one or more fluid circuits (5) being flow and temperature regulated, which enables the glass-refractory interface to be either heated or cooled.

2. Method according to claim 1, characterised in that operation of controlling and regulating the glass-refractory interface temperature is effected by means of fluid circuits (5) running parallel to the main flow direction of the glass (V) near the floor.

3. Method according to claim 1, characterised in that there is injected into the fluid circuits (5), advantageously in the form of successive supplementary injections of decreasing amplitude, a heating or cooling flux per m$^2$ surface area exposed to the glass, the value of the flux not exceeding 50%, preferably being less than 20%, of the flux per m$^2$ passing through the floor before correction, the next supplementary injection being advantageously effected after stabilisation of the temperature near the glass-refractory interface and/or of the intermediate layer (3) of the floor following the previous injection.

4. Method according to claim 1, characterised in that the temperature is measured of the refractory near the glass-refractory interface and of a refractory intermediate layer (3) situated, on the one hand, below the upper refractory layers (1,2), which must resist corrosion and glass infiltration and, on the other hand, above the lower insulating layer(s) (4), and in that the temperature and the heat flow of the fluid introduced into the fluid circuit (5) is controlled in function of the said temperatures in the refractories so as prevent a thermal shock from being produced.

**5.** Method according to claim 1, characterised in that the temperature of the fluid is regulated in function of the temperature of the intermediate layer (3) and of the difference between on the one hand the temperature of the refractory near the glass-refractory interface and on the other hand the set value of this temperature.

**6.** Method according to claim 1, characterised in that the heat flow of the fluid introduced into the circuit (5) is regulated in relation to the difference between the temperature of the refractory near the glass-refractory interface and the set value of this temperature and in function of the heat loss of the floor before regulating.

**7.** Method according to claim 1, characterised in that the temperature of the fluid and the heat flow of the fluid are respectively regulated in function of:

> a) the temperature of the intermediate layer (3) and of the difference between on the one hand the temperature near the glass-refractory interface and on the other hand the set value of this temperature, and
> b) the difference between a temperature of the refractory near the glass-refractory interface and the set value of this temperature and in function of the heat loss of the floor before regulating.

**8.** Method according to claim 1, characterised in that the heat flow of the fluid is regulated between a non-zero minimum value and a maximum value, whereby the minimum value corresponds to a supplementary injection of heat flow of the fluid which does not or little influence the temperature of the refractory near the interface.

**9.** Method according to claim 1, characterised in that the heat flow of the fluid is regulated between a non-zero minimum value and a maximum value, whereby the minimum value corresponds to a supplementary injection of heat flow of the fluid influencing the temperature of the refractory near the interface by at most 1 to 2°C.

**10.** Method according to claim 1, characterised in that the heat flow of the fluid is regulated between a non-zero minimum value and a maximum value, whereby the maximum value corresponds to a supplementary injection of heat flow of the fluid corresponding to twice the difference in heat flux between the heat losses of the floor at respectively the temperature of the glass-refractory interface before the first injection and at the set value of said temperature.

**11.** Method according to claim 1, characterised in that the temperature of the fluid is regulated in relation to the temperature of the intermediate layer (3) so that the difference in temperature between the fluid and the intermediate layer (3) decreases when the temperature of the interface approaches the set value of said temperature.

**12.** Method according to claim 1, characterised in that the fluid is injected into the circuit at a temperature between a minimum value and a maximum value which corresponds to the temperature of the intermediate layer (3) reduced or incremented by twice the difference between the temperature near the glass-refractory interface before the first injection and the set value of said temperature.

**13.** Method according to claim 1, characterised in that the temperature of the refractory near the glass-refractory interface is measured in different areas of the floor or floor parts each provided with an independent fluid circuit (5) and whereby the temperature and the flow of the fluid are each regulated independently of one another, for imposing a thermal gradient between said areas or for reducing the thermal gradient between parts of an area.

**14.** Assembly for glass furnace (17, 18, 25, 26, 27) for conducting a method according to any one of claims 1 to 13, said assembly comprising a floor or floor part consisting of several layers of refractory materials, the upper layers (1,2) of which are selected to resist corrosion and infiltration by glass melt and at least the bottom layer of which is selected for thermally insulating the floor, characterised in that the floor or floor part moreover comprises at least one intermediate layer (3) situated between the lower layer (4) and the upper layers (1,2), whereby said intermediate layer comprises one or more fluid circuits (5) enabling either to heat or to cool the glass-refractory interface, and in that the assembly comprises a means influencing the temperature and the flow of the fluid(s) so as to control and regulate the glass-refractory interface temperature.

**15.** Assembly according to claim 14, characterised in that the fluid circuits (5) are adapted to provide a fluid -refractory exchange surface area at least equal to 15% of the surface area of the upper layer (1) exposed to the glass.

**16.** Assembly according to claim 14, characterised in that the fluid circuits (5) are adapted to present a fluid-refractory exchange surface area between 25 and 100% of the surface area of the upper layer (1) exposed to the glass.

**17.** Assembly according to claim 14, characterised in that the floor is equipped with at least two thermocouples, one of which (thermocouple 1) is installed in the electrocast refractory, the other (thermocouple 2) serving to measure the temperature of the refractory of the intermediate layer (3), said thermocouples being destined to be connected to a command device of a ventilator-burner providing a fluid flow relative to the difference between the temperature of the glass-refractory interface, measured by thermocouple 1, and the set value of said temperature, said fluid having a temperature avoiding or limiting any thermal shock in the refractory containing the fluid circuit (5).

**18.** Assembly according to claim 14, characterised in that the floor consists of blocks (11) comprising one or more conducts (7) forming the fluid circuit(s) (5), at least one of the blocks containing thermocouple 2.

**19.** Assembly according to claim 14, characterised in that the floor consists of blocks (6) comprising one or more conducts (7) in cooperating relationship with the conducts (7) of other blocks for forming the fluid circuit(s) (5), at least one of the blocks containing thermocouple 2.

**20.** Assembly according to claim 19 or 20, characterised in that the floor consists of blocks (6,11) with engaging side surfaces.

**21.** Assembly according to claim 19 or 20, characterised in that the floor comprises compressible plates (8) of refractory fibres situated between blocks ( 6) and provided with suitable holes (9) positioned with a view to the conducts (7).

**22.** Assembly according to claim 19 or 20, characterised in that the conduct (7) is provided with means for increasing the fluid-refractory exchange surface area.

**23.** Assembly according to claim 14, characterised in that the intermediate layer (3) is made of unshaped refractory articles, placed by (vibro)pouring or stacking.

**24.** Glass furnace provided with an assembly according to any one of claims 14 to 23, said assembly comprising a ventilator-burner commanded by a command device receiving signals from means measuring the temperature of the refractory near the glass-refractory interface and the temperature of the intermediate layer (3), said command device providing a fluid, the temperature and the heat flow of which are regulated for putting into practice the method according to any one of claims 1 to 13.

FIGURE 1

FIGURE 2

FIGURE 3

FIGURE 4

FIGURE 5A

FIGURE 5B

FIGURE 5C

FIGURE 6

FIGURE 7

(7)

(11)

(10)

(12)

(13)

(14)

(17)

(15)

(16)

(18)

EP 0 802 889 B1

17

FIGURE 8